# EUROPÄISCHE PATENTSCHRIFT

(11) **EP 4 146 453 B1**
(45) Veröffentlichungstag und Bekanntmachung des Hinweises auf die Patenterteilung: **18.09.2024**
(21) Anmeldenummer: 21735859.7
(22) Anmeldetag: 14.06.2021
(51) Int. Cl.: B29C 59/04, B29C 63/00

(54) **VERFAHREN ZUM HERSTELLEN EINER ANBAULEISTE**
METHOD FOR PRODUCING AN ATTACHMENT STRIP
PROCÉDÉ DE PRODUCTION D'UNE BANDE DE FIXATION

(30) Priorität: 03.08.2020 DE 102020120395
(43) Veröffentlichungstag der Anmeldung: 15.03.2023
(73) Patentinhaber: SURTECO GmbH, 86647 Buttenwiesen (DE)
(72) Erfinder: MENKE, Oliver, 44879 Bochum (DE); OTTOW, Martin, 45134 Essen (DE); KREMER, Christoph, 46286 Dorsten (DE); PETRAKIS, Jordanis, 42277 Wuppertal (DE)
(74) Vertreter: Andrejewski - Honke Patent- und Rechtsanwälte Partnerschaft mbB
(86) Internationale Anmeldenummer: PCT/EP2021/065974
(87) Internationale Veröffentlichungsnummer: WO 2022/028758

(56) Entgegenhaltungen:
- EP-A1- 2 121 198
- CN-A- 107 263 852
- US-B1- 9 296 146

## Beschreibung

Die Erfindung betrifft ein Verfahren zum Herstellen einer (dekorativen) Anbauleiste für die Befestigung an einer dekorativen Platte, wobei die Anbauleiste eine strukturierte Oberfläche aufweist,
wobei ein Leistenkörper aus thermoplastischen Kunststoff erzeugt wird und
wobei in die Leistenoberfläche des Leistenkörpers mit einem Prägemittel eine Leistenstruktur eingeprägt wird.

Bevorzugt handelt es sich bei der Anbauleiste um eine Kantenleiste, d.h. die Erfindung betrifft bevorzugt ein Verfahren zum Herstellen einer Kantenleiste mit einer strukturierten Oberfläche, für die Schmalflächenbeschichtung einer Möbelplatte oder der gleichen Platte. Eine solche Kantenleiste wird auch als Kantenband oder einfach nur als Kante bzw. Möbelkante bezeichnet. Sie besteht bevorzugt aus thermoplastischen Kunststoff und wird z.B. im Wege der Extrusion hergestellt. Sie dient bevorzugt der Beschichtung der Schmalflächen bzw. Stirnflächen von Werkstoffplatten, d.h. plattenförmigen Werkstücken wie z.B. Möbelplatten oder Arbeitsplatten (z.B. Küchenarbeitsplatten). Solche Werkstoffplatten sind z.B. als Holzplatten oder Holzwerkstoffplatten (z.B. Spanplatten, Faserplatten oder dergleichen) oder auch als Verbundplatten ausgebildet. Es kann sich zum Beispiel auch um Laminate bzw. Laminatplatten wie z.B. CPL (Continuous Pressure Laminate) oder HPL (High Pressure Laminat) handeln.

Die Platten, z.B. Möbelplatten oder dergleichen, sind in der Regel (auf der Oberseite und/oder Unterseite) mit einem Oberflächendekor und/oder einer Oberflächenstrukturierung versehen, die z.B. der Nachbildung verschiedener Dekorarten, z.B. Echtholzdekore, Steindekore oder dergleichen dienen. Im Zuge der Herstellung solcher Platten mit einer Oberflächenstrukturierung werden in der Praxis z.B. Prägepapiere (Releasepapiere) als Strukturgeber eingesetzt. So werden die Platten z.B. in einer Presse hergestellt oder in einer Presse verarbeitet und im Zuge des Pressvorgangs wird in die Plattenoberfläche mit Hilfe der Prägepapiere eine Struktur eingeprägt.

Oberflächenstrukturierungen von Bauteilen oder Platten sind ein wesentlicher Bestandteil der Produktanmutung und der Designcharakteristik. Strukturierungen erstrecken sich vom Mikro- (z.B. Glanz-/Matt-Effekte, Anti-Finger-Print) bis zum Makrobereich (z.B. Holzstrukturen, Reliefs oder symmetrische Ausformungen oder Vertiefungen). Strukturierungen bestimmen neben den Werkstoffeigenschaften wesentlich die Haptik oder auch die Wirkung der Dekore, z. B. Natürlichkeit von in Kunststoff reproduzierten Holz- oder Steinoberflächen.

In der Praxis ist man bestrebt, eine ganzheitliche Wirkung der Bauteiloberflächen (z.B. im Möbelbereich) zu erreichen (Dekorverbund). Dieses ist mit einem gewissen Aufwand verbunden, da z.B. eine Möbelplatte aus verschiedenen technischen Werkstoffen besteht, die in unterschiedlichen Prozessen hergestellt und verarbeitet werden. Die Oberflächen der Möbelplatte (d.h. Oberseite und/oder Unterseite) bestehen im Wesentlichen aus Dekorfolien (z.B. auf Papierbasis), die zur Verbesserung der Eigenschaften und Beständigkeit mit Harzen oder anderen härteren, reaktiven Polymeren getränkt bzw. beschichtet und durch Bedruckung dekorativ veredelt werden. Demgegenüber werden die umlaufenden Schmalflächen bzw. Stirnflächen oder Schmalseiten einer Möbelplatte mit speziellen Kantenleisten geschlossen, die als Schmalflächenbeschichtungsmaterialien bezeichnet werden und auf Basis von Kunststoff, Melaminpapier oder Furnier hergestellt sind.

Zur Erzielung eines möglichst guten Dekorverbundes versucht man, die Schmalflächen bzw. Kantenleisten ebenfalls mit einer Strukturierung zu versehen, die der Strukturierung der Plattenoberflächen nahekommt. Die Anpassung der Oberflächenstrukturierungen zur Erzielung eines einheitlichen Erscheinungsbildes ist technisch aufwendig.

Bislang ist es in der Praxis üblich, die Kantenleisten mit der gewünschten Leistenstruktur durch ein Prägeverfahren mit Strukturwalzen zu erzeugen. Es werden folglich strukturierte Prägewalzen eingesetzt, mit denen in die Kantenleiste eine Oberflächenstruktur eingeprägt wird. Damit lassen sich insbesondere Kantenleisten für die Schmalflächenbeschichtung in wirtschaftlicher Weise in großen Mengen herstellen. Insofern hat sich das Strukturieren von Kantenleisten oder dergleichen mit Prägewalzen bewährt. Das Verfahren ist jedoch aus verschiedenen Gründen verbesserungsfähig. - Hier setzt die Erfindung ein.

Ein Verfahren zum Herstellen einer Platte mit einer strukturierten Oberfläche unter Einsatz einer Strukturbahn ist z.B. aus der EP 2 121 198 B1 bekannt. Dabei erfolgt die Beschichtung einer Holzwerkstoffplatte, insbesondere einer Echtholzplatte, einer Funierplatte oder einer Parkettplatte, mit einem fließfähigen Kunststoffmaterial. Zunächst wird das Kunststoffmaterial als eine einzelne Schicht auf die Holzwerkstoffplatte aufgetragen und anschließend wird eine Materialbahn mit strukturierter Oberfläche auf der Schicht aus Kunststoffmaterial versehen, um die Schicht aus Kunststoffmaterial mit einer Struktur zu versehen. Danach erfolgt ein Trocknen und/oder Härten der Schicht aus Kunststoffmaterial und schließlich wird die Strukturbahn entfernt. Mit diesem Verfahren wird folglich eine Strukturierung in die Plattenoberflächen einer speziell hergestellten Holzwerkstoffplatte eingebracht.

Der Einsatz von strukturierten Bahnen bzw. Releasepapieren für die Strukturierung von Plattenoberflächen wird z.B. auch in der EP 3 411 232 B1 beschrieben.

Aus der EP 3 415 316 B1 ist ebenfalls ein Verfahren zur Erzeugung einer dekorativen, strukturierten Oberfläche bekannt, wobei die Strukturierung mit einem Strukturierungselement erfolgt, das als Prägewalze und/oder Digitaldruckkopf ausgebildet sein kann.

Schließlich befasst sich auch die WO 2017/135810 A1 mit der Herstellung von dekorativen und strukturierten Plattenoberflächen.

Auf die Herstellung von strukturierten Kunststoffleisten aus thermoplastischen Kunststoff, die z.B. als Kantenbänder für die Schmalflächenbeschichtung von Platten eingesetzt werden, hatten diese Entwicklungen bislang keinen Einfluss.

Gleiches gilt für ein aus der JP 2014-4696 A bekanntes Verfahren aus dem Bereich der Nanodrucktechnologie.

Im Übrigen beschreibt die DE 2250 046 A ein wärmeaktivierbares Dekormaterial mit einer Trägerschicht und einem an einer Seite derselben aufgebrachten Überführungsmaterial. Bei der Trägerschicht handelt es sich um ein hitzebeständiges, flexibles, faltbares Blattmaterial. Im Vordergrund steht das Dekor von Oberflächen und insbesondere Tischplatten, Wandpaneelen und Schranktüren. Das Dekor wird auf Bahnen gedruckt, die auf die Oberflächen aufgebracht werden, dabei wird ein verhältnismäßig aufwendiger Mehrschichtaufbau eingesetzt, der in einer inneren Reliefschicht mit einer Struktur versehen ist. Der gesamte Verbund wird auf eine Unterlage aufgepresst und nach Überführung auf den Untergrund wird ein Teil des Schichtaufbaus entfernt, sodass die strukturierte Oberfläche freigelegt wird.

Die DE 2111 141 beschreibt eine Schichtpressstoffplatte mit einer witterungsbeständigen Oberflächenschicht. Dazu werden einzelne Bahnen oder Schichten zum Pressen vorbereitet, sodass das Plattenmaterial in einem einzigen Arbeitsgang gepresst werden kann. Die jeweils gewünschten Oberflächenstrukturen an der Oberfläche der glasfaserverstärkten Polyesterharzschicht kann man dadurch erzeugen, dass man, jeweils unter Verwendung eines Trennmittels, ein entsprechend strukturiertes Prägeblech oder ein Prägepapier beim Pressen zwischenlegt, welches einen Abdruck in der Polyesterharzschicht hinterlässt.

In der US 9,296,146 B1 wird ein Verfahren bzw. eine Anlage zur Herstellung von Folien beschrieben, die mit einer Prägung versehen sein können.

### Ähnliches gilt für die CN107263852A.

Im Übrigen offenbart die WO 2008/061765 A1 ein Verfahren zum Direktbedrucken von Holzwerkstoffplatten.

Schließlich beschäftigt sich die US 9 796 129 B2 mit der Herstellung von Formkörpern für die Fahrzeugindustrie in einem Spritzprozess.

Der Erfindung liegt die Aufgabe zugrunde, ein Verfahren zu schaffen, dass in wirtschaftlicher Weise die Herstellung einer strukturierten Anbauleiste, z.B. Kantenleiste, ermöglicht, die sich im Dekorverbund mit der Plattenoberfläche durch ein besonders einheitliches Erscheinungsbild auszeichnet. Insbesondere soll die Möglichkeit geschaffen werden, eine dekorative Platte, z.B. Möbelplatte, bereitzustellen, die im idealen Dekorverbund sowohl auf der Plattenoberfläche (d.h. Oberseite und/oder Unterseite der Platte) als auch an den Schmalflächen eine identische oder im Wesentlichen identische Oberflächenstruktur besitzt.

Zur Lösung dieser Aufgabe lehrt die Erfindung bei einem gattungsgemäßen Verfahren zum Herstellen einer dekorativen Anbauleiste, dass als Prägemittel eine (bahnförmige und/oder streifenförmige) Strukturbahn verwendet wird, die mit einer strukturierten Prägeoberfläche versehen ist und mit der die Struktur in die Leistenoberfläche eingeprägt wird, und zwar bevorzugt ohne Relativbewegung zwischen der zu prägenden Leistenoberfläche und der Strukturbahn. Besonders bevorzugt wird als Strukturbahn ein Strukturpapier verwendet. Dieses besteht aus einem Basispapier bzw. Trägerpapier, das mit einer Strukturschicht beschichtet ist. Die Strukturbahn, z.B. das Strukturpapier, steht z.B. als Rollenware zur Verfügung und es ist optional wiederverwendbar, d.h. mehrfach einsetzbar.

Die Erfindung geht dabei von der Erkenntnis aus, dass die bekannten Verfahren zum Prägen von leistenförmigen Produkten, z.B. Kantenleisten für die Schmalflächenbeschichtung, zwar einfach und wirtschaftlich durchzuführen sind, jedoch Nachteile in Bezug auf den gewünschten Dekorverbund haben. So wird beim Einsatz von herkömmlichen Prägewalzen oder der Kalandertechnologie das zu prägende Substrat im plastischen Zustand durch einen Prägespalt, der von zwei Walzen (Prägewalze und Gegenwalze) gebildet wird, unter Andruck geführt. Der Prägedruck entsteht bei diesem herkömmlichen Verfahren als Liniendruck nur am Prägespalt. Das geprägte Substratband kühlt entweder frei oder mit einer geringen Anlagestrecke auf der Prägewalze aus. Nachteilig ist vor allem, dass - je nach Prozessführung - die geprägte Struktur bis zur Abkühlung relaxieren kann und somit an Kontur und Prägetiefe verliert. Im Übrigen ist es sehr schwer, mit einem solchen Prägeverfahren mit Hilfe einer Prägewalze die Reproduktion einer vorgegebenen Strukturoberfläche der Platte zu reproduzieren, da die Strukturierung der produktspezifischen Bauteile mit verschiedenen Verfahren geprägt werden.

Erfindungsgemäß wird daher bei der Strukturierung der Leistenoberfläche einer dekorativen Anbauleiste auf die gleichen Prägemittel zurückgegriffen, die auch für das Prägen der Plattenoberflächen eingesetzt werden, nämlich auf grundsätzlich bekannte Strukturbahnen bzw. Strukturpapiere, die auch als Trennpapiere oder Releasepapiere bezeichnet werden. Es werden folglich sowohl für die Erzeugung der Plattenoberfläche als auch für die Erzeugung der Leistenoberfläche bahnförmige Strukturgeber verwendet, d.h. die grundsätzlich bekannten Strukturgeber werden sowohl für die Strukturierung der Plattenoberfläche (z.B. CPL, HPL oder Direktlamination) als auch für die Strukturierung der Kantenbänder aus thermoplastischen Kunststoffen verwendet. Dabei wird auf die gleiche Prägetechnologie und die gleichen Strukturgeber zurückgegriffen, obwohl sich die Herstellung der Platten einerseits und der thermoplastischen Kantenleisten andererseits stark voneinander unterscheiden. Versuche haben bestätigt, dass sich strukturierte Strukturbahnen, z.B. Strukturpapiere oder Trennpapiere, die in der Praxis bislang ausschließlich für die Strukturierung der (oberen oder unteren) Plattenoberflächen eingesetzt werden, ebenfalls hervorragend als Strukturgeber für das Prägen von thermoplastischen Kunststoffleisten, z.B. Kantenbändern verwenden lassen, die z.B. in Extrusionsprozess oder im Spritzgießverfahren hergestellt werden.

Vorteilhaft ist dabei zum einen, dass durch die Verwendung identischer Strukturgeber auch eine identische Struktur in die jeweiligen Komponenten eingeprägt wird und damit ein optimaler Dekorverbund erzielt wird. Zum anderen besonders vorteilhaft, dass die Nachteile, die sich beim Prägen mit Prägewalzen bei thermoplastischen Kantenleisten ergeben, durch den Einsatz von Strukturbändern oder Strukturpapieren auf einfache Weise vermeiden lassen. Denn beim Einsatz von Strukturbahnen als Prägemittel entsteht der Prägedruck nicht lediglich als Liniendruck am Prägespalt, sondern zum Prägen der Leistenoberfläche wird die Strukturbahn auf einer bestimmten Länge und folglich Anlage- bzw. Wirkstrecke von z.B. zumindest 20 cm, vorzugsweise zumindest 30 cm, gegen die Leistenoberfläche gedrückt, und zwar bevorzugt ohne Relativbewegung zwischen Strukturbahn und Leistenoberfläche. Der Prägedruck wird folglich über eine ausreichende Verweilzeit bis zur Erreichung einer ausreichenden Verfestigung mit der Strukturbahn in die Kunststoffleiste eingeprägt, sodass die unerwünschten Relaxierungseffekte, die beim Prägen mit Prägewalze beobachtet wurden, vermieden werden.

Der Leistenkörper kann z.B. durch Extrusion erzeugt werden und die Struktur kann inline, d.h. unmittelbar im Anschluss an die Extrusion in den sich noch im heißen, plastischen Zustand befindlichen Leistenkörper geprägt werden. Alternativ kann in einem Offline-Prozess zunächst der Leistenkörper hergestellt werden, z.B. durch Extrusion, und dieser vorgefertigte (kalte) Leistenkörper wird anschließend wieder erwärmt und die Struktur in die (nachträglich) erwärmte Oberfläche des Leistenkörpers mit Hilfe der Strukturbahn geprägt. Stets erfolgt die Prägung bei diesen Ausführungsformen kontinuierlich in den sich bewegenden Leistenkörper, indem die Strukturbahn mit dem sich bewegenden Leistenkörper mit der gleichen Geschwindigkeit mitgeführt wird, sodass eine ausreichende Anlagestrecke von zumindest 20 cm, vorzugsweise zumindest 30 cm, z.B. 20 cm bis 80 cm, z.B. 30 cm bis 60 cm erzielt wird.

Dabei kann der Leistenkörper zum Prägen der Struktur z.B. gemeinsam mit der Strukturbahn über oder um mehrere Walzen geführt werden, wobei diese Walzen jedoch nicht selbst als Prägewalzen ausgebildet sind und folglich keinen Liniendruck erzeugen, sondern als Prägemittel wird die um die Walzen geführte Strukturbahn verwendet, so dass die beschriebene, verlängerte Anlagestrecke realisiert wird. So kann die Strukturbahn z.B. um mehrere Andruckwalzen oder Kalanderwalzen bzw. Glättwerkswalzen geführt werden. So wird eine zur Verfestigung bzw. Abkühlung ausreichende Verweilzeit der Prägebahn mit dem Polymersubstrat erreicht, bestimmt über die Anlagedauer bzw. Länge der Kontaktzeit oder Strecke. Durch eine Hydrophobierung kann die Anlagedauer bzw. Anlagestrecke durch eine zusätzliche Wasserbeaufschlagung verkürzt werden. Sehr gute Prägeergebnisse ergeben sich bei einer Anlagestrecke von 30 cm bis 60 cm und einer Extrusionsbahngeschwindigkeit von 18 bis 25 m/min.

In einem alternativen Verfahren besteht die Möglichkeit, den Leistenkörper durch Spritzgießen zu erzeugen und die Struktur während des Spritzprozesses mit der in dem Spritzwerkzeug angeordneten Strukturbahn (unmittelbar) in die Leistenoberfläche einzuprägen. Sowohl der Leistenkörper als auch das Prägemittel ruhen bei diesem Verfahren, sodass auch hier auf eine Relativbewegung zwischen Prägemittel und Leistenkörper verzichtet wird. Zudem wird auch bei diesem Verfahren eine Prägung über eine ausreichende Verweilzeit und Anlagestrecke realisiert, sodass die bei herkömmlichen Verfahren beobachtete Relaxierung vermieden wird.

Ein besonderer Vorteil der Erfindung ist, dass auf grundsätzlich bekannte Strukturbahnen, z.B. Strukturpapiere bzw. Trennpapiere zurückgegriffen werden kann, die jedoch bislang ausschließlich für die Erzeugung von Oberflächenstrukturen der Plattenoberflächen verwendet wurden.

Die Strukturbahnen weisen bevorzugt eine Dicke (inklusive Struktur) von 100 µm bis 500 µm, z.B. 100 µm bis 300 µm, vorzugsweise 120 µm bis 250 µm auf. Die strukturierte Prägeoberfläche der Strukturbahn bzw. des Strukturpapiers weist Erhebungen auf, die eine Höhe bzw. Tiefe von bis zu 200 µm, vorzugsweise bis zu 150 µm aufweisen. Dabei können solche strukturierten Prägeoberfläche Erhebungen mit einer Höhe von zumindest 50 µm, vorzugsweise zumindest 100 µm aufweisen.

Die Strukturbahn, die bevorzugt als Strukturpapier ausgebildet ist, wird z.B. mit einer Prägeoberfläche ausgerüstet, die von einer strukturierten Lackschicht gebildet wird und die folglich durch einen Lackauftrag auf einem Basispapier bzw. Trägerpapier erzeugt wird.

Außerdem besteht die Möglichkeit, dass die Strukturbahn nicht nur als Strukturgeber, sondern zugleich auch als Glanzgeber ausgebildet ist, indem die Prägeoberfläche z. B. von einer satinierten Oberfläche gebildet wird bzw. mit einer satinierten Oberfläche ausgerüstet ist.

Insgesamt lassen sich Strukturbahnen bzw. Strukturpapiere mit unterschiedlichen Strukturierungen und unterschiedlichen Glanzgraden einsetzen. Dabei ist es vorteilhaft, wenn die Strukturbahn auf der Prägeoberfläche und/oder auf der der Prägeoberfläche gegenüberliegende Rückseite mit einer Trennschicht, z.B. mit einer Oberflächenlackierung oder einer Trenn- oder Gleitmittelschicht versehen ist. Das Prägepapier kann folglich bevorzugt auf der rückseitigen, nicht strukturierten Seite hydrophobiert sein. Die Hydrophobierung erfolgt über übliche temperaturbeständige Trenn- und Gleitmittel. Durch das Hydrophobieren der ungeschützten Prägepapierrückseite wird einerseits der Kühleffekt der Andruckwalze durch die bessere Wärmeleitung erhöht, als auch die Möglichkeit geschaffen, die Bahnkühlung durch ein Wasserbad bzw. eine Wasserdusche wesentlich zu verbessern. Des Weiteren wird die Robustheit und das Anliegen der Trennpapierbahnen an den Walzenoberflächen im Prozess verbessert. Alternativ zu der Erzeugung der Strukturierung des Trägerpapiers mittels Lackauftrag besteht die Möglichkeit, einen Strukturgeber mit einer leicht trennenden ESH-Oberflächenlackierung (Elektronenstrahl-Technologie) einzusetzen.

Der zu prägende Leistenkörper bzw. die Anbauleiste selbst besteht aus thermoplastischen Kunststoff, und zwar bevorzugt aus der Gruppe: ABS, PP, PE, PC, PMMA, PVC, PS, PET, TPU oder dergleichen. Das erfindungsgemäße Verfahren zeichnet sich durch eine einheitliche und gute Anwendbarkeit bei verschiedenen Polymeren bzw. Polymergruppen mit guten Ergebnissen aus.

Alternativ kann es sich bei den zu strukturierenden Leisten bzw. Leistenkörpern um solche mit einem mehrschichtigen Aufbau handeln, die z.B. durch Koextrusion hergestellt werden. So können z.B. koextrudierte Kantenleisten strukturiert werden, die einerseits einen Leistenkörper aus einem thermoplastischen Kunststoff mit der die Sichtseite bildenden Leistenoberfläche aufweisen und andererseits eine rückseitige (thermoplastische) Schmelzschicht bzw. Funktionalschicht, die der Befestigung der Leiste an der Schmalfläche der Platte dient.

Außerdem ist Gegenstand der Erfindung ein Verfahren zum Herstellen einer dekorativen Platte, insbesondere einer Möbelplatte, wobei ein Plattenkörper mittels eines Prägemittels mit einer Oberflächenstruktur versehen wird und wobei eine Anbauleiste der beschriebenen Art an dem Plattenkörper, z.B. an einer Schmalfläche einer Möbelplatte befestigt wird. Dieses Verfahren zeichnet sich dadurch aus, dass für das Prägen der Oberflächenstruktur der Platte (d.h. Oberseite und/oder Unterseite der Platte) einerseits und für das Prägen der Leistenstruktur der Anbauleiste andererseits Strukturbahnen mit identischem Aufbau und identischer Struktur verwendet werden. Für das Strukturieren der Leistenoberfläche werden folglich die gleichen Strukturpapiere eingesetzt, wie für das herkömmliche Strukturieren der Plattenoberflächen. Die eingesetzten Strukturgeber unterscheiden sich folglich in ihrem Aufbau und in ihrer Struktur nicht. Es können aber Strukturbahnen unterschiedlicher Breite eingesetzt werden, da natürlich für das Prägen der Plattenoberflächen größere Breiten benötigt werden als für das Prägen der deutlich schmaleren Kantenleisten, auch wenn die Herstellung von Kantenleisten optional zunächst in größeren Breiten erfolgt und die Kantenleisten aus einem thermoplastischen Vorprodukt durch Längsschnitte aufgetrennt werden. Besonders vorteilhaft ist es, die Strukturbahnen, die für die Strukturierung der Plattenoberfläche einerseits und für die Strukturierung der Leistenoberfläche andererseits benötigt werden, aus ein und derselben Mutterrolle zuzuschneiden, sodass ein besonders guter Dekorverbund erzielt wird.

Insgesamt lassen sich erfindungsgemäß dekorative Platten herstellen, die sich durch eine absolute Gleichheit bzw. ein hohes Maß an Gleichheit der Oberflächenstruktur und der Schmalflächenstruktur (Dekorverbund) auszeichnen, und zwar bei gleichzeitiger Erhöhung der Wirtschaftlichkeit der Herstellung durch Reduzierung der Prägewalzenrüstzeiten und Walzenkosten. Dabei ist der Einsatz von Prägepapieren auch bei Produktionsanlagen ohne Glättwerk möglich. Der Einsatz der trennenden Prägepapiere bei polaren und unpolare Thermoplasten ist möglich. Durch Hydrophobierung der Prägepapierträgerstruktur aus Zellstoff ist eine Verbesserung der Bahnkühlung durch Wassereinsatz möglich.

Es bestehen keine Einschränkungen hinsichtlich der Substratstärken, sodass z.B. Leistenkörper mit einer Dicke von 0,4 mm bis 4 mm einwandfrei hergestellt werden können. Ferner gelingt die Herstellung mit hohen Produktionsgeschwindigkeiten.

Bevorzugt handelt es sich bei der Anbauleiste um eine Kantenleisee. Alternativ sind aber auch andere Anbauleisten oder -teile in Form von Profilen, Leisten, Kedern, Sockel, Blenden für Platten, z.B. Schichtstoffplatten im Strukturverbund erfasst.

Im Folgenden wird die Erfindung anhand von Zeichnungen näher erläutert, die lediglich Ausführungsbeispiele darstellen. Es zeigen
- Fig. 1: schematisch vereinfacht eine Anlage bzw. ein Verfahren zur Herstellung einer Leiste mit strukturierter Leistenoberfläche in einer ersten Ausführungsform,
- Fig. 2: eine Anlage bzw. ein Verfahren nach Fig. 1 in einer abgewandelten, zweiten Ausführungsform,
- Fig. 3: eine dritte Ausführungsform des Verfahrens nach Fig. 1,
- Fig. 4A, 4B, 4C: eine abgewandelte vierte Ausführungsform der Erfindung und
- Fig. 5: eine dekorative Platte, deren Kantenleiste z. B. mit einem Verfahren gemäß Figuren 1 bis 4 hergestellt ist.

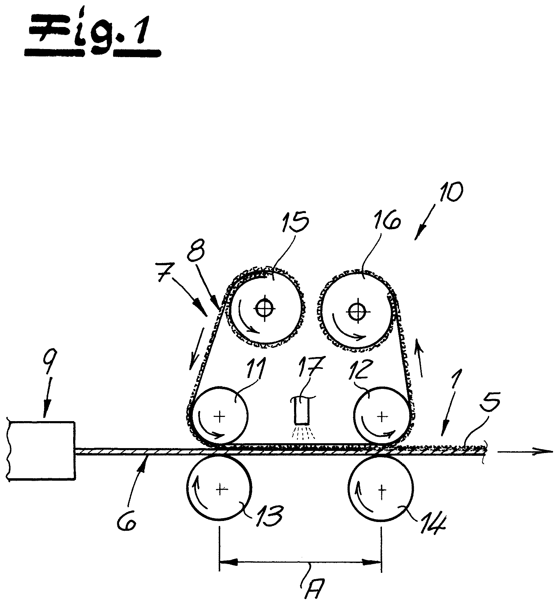

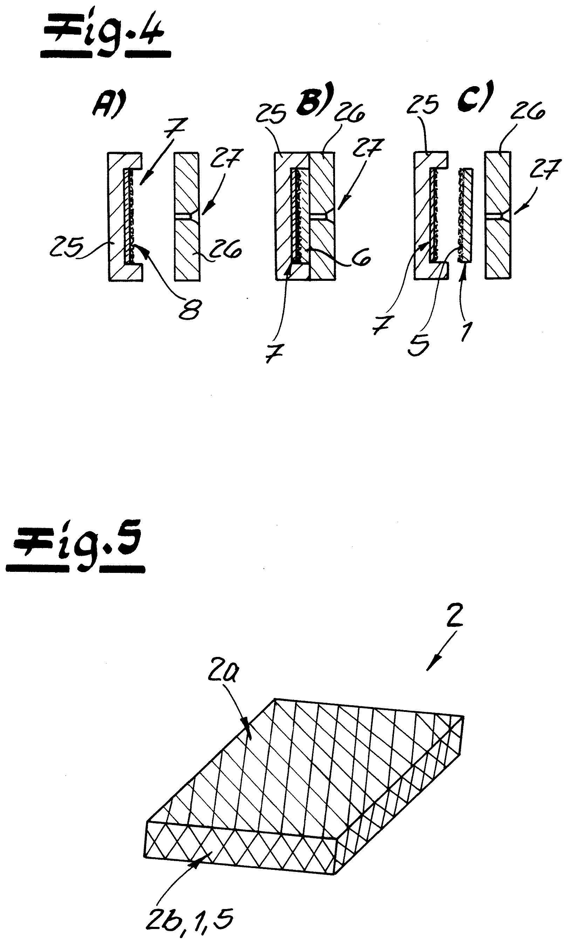

In den Figuren 1 bis 4 ist in verschiedenen Varianten eine Anlage bzw. ein Verfahren zum Herstellen einer dekorativen Anbauleiste mit einer strukturierten Oberfläche dargestellt. Bei der Anbauleiste 1 kann es sich insbesondere um eine Kantenleiste 1 für die Schmalflächenbeschichtung einer Platte 2, z.B. einer Möbelplatte handeln. Eine solche Möbelplatte gemäß Fig. 5 weist einerseits eine oder mehrere dekorative Oberflächen 2a und andererseits die stirnseitigen Schmalflächen bzw. Stirnflächen 2b auf. Die Oberflächen 2a sind in der Regel mit einem Dekor und mit einer Oberflächenstrukturierung 3 versehen, z.B. als Möbelplatten, Laminatplatten oder dergleichen. Um auch im Bereich der Stirnflächen 2b ein identisches oder zumindest sehr ähnliches Dekor mit einer entsprechenden Strukturierung zu erzielen, werden auch die stirnseitig befestigten Kantenleisten 1 strukturiert und folglich im Bereich der Leistenoberfläche mit einer Leistenstruktur 5 versehen. Das Herstellen einer solchen Leiste 1 mit strukturierter Leistenoberfläche ist in den Figuren 1 bis 4 dargestellt.

Stets wird ein Leistenkörper 6 aus einem thermoplastischen Kunststoff erzeugt und in die Leistenoberfläche des Leistenkörpers 6 wird mit einem Prägemittel eine Leistenstruktur 5 eingeprägt. Erfindungsgemäß kommt als Prägemittel eine bahnförmige bzw. streifenförmige Strukturbahn 7 zum Einsatz, die mit einer strukturierten Prägeoberfläche 8 versehen ist und mit der die Struktur in die Leistenoberfläche eingeprägt wird. Dabei zeigen die Figuren 1 bis 3 Ausführungsformen, bei denen die Strukturbahn 7, die z.B. als Strukturpapier 7 bzw. Trennpapier ausgebildet ist, mit dem sich bewegenden Leistenkörper 6 mitgeführt und im Zuge der Bewegung die Leistenstruktur 6 kontinuierlich in die Leistenoberfläche des Leistenkörpers 6 geprägt wird. Der Leistenkörper 6 selbst wird bei der Ausführungsform nach den Figuren 1 bis 3 in der Regel durch Extrusion hergestellt. Demgegenüber zeigt Fig. 4 eine abgewandelte Variante, bei der der Leistenkörper 6 durch Spritzgießen erzeugt und die Struktur während des Spritzprozesses mit der in dem Spritzwerkzeug angeordneten Strukturbahn 7 in die Leistenoberfläche geprägt wird, ohne dass die Strukturbahn 7 und der Leistenkörper 6 bewegt bzw. transportiert werden.

In der ersten Ausführungsform nach Fig. 1 wird der Leistenkörper 6 mit Hilfe eines lediglich angedeuteten Extruders 9 durch Extrusion erzeugt und die Strukturierung wird mit Hilfe des Strukturpapiers 7 in den sich noch im heißen plastischen Zustand befindlichen Leistenkörper 6 geprägt, und zwar mit einer Prägevorrichtung 10. In dieser wird das Strukturpapier 7 über eine erste Andruckwalze 11 und eine zweite Andruckwalze 12 geführt und damit über eine Anlagestrecke A vorgegebener Länge gegen den Leistenkörper 6 gedrückt und damit die Leistenstruktur 5 in die Leistenoberfläche eingeprägt. Der Leistenkörper 6 ist auf zwei Andruckgegenwalzen 13, 14 abgestützt. Die Strukturbahn 7 ist im Ausführungsbeispiel nicht im Umlauf geführt, sondern sie wird von einer Abwickelwalze 15 abgewickelt, um die Andruckwalzen 11, 12 geführt und mit einer Aufwickelwalze 16 aufgewickelt. Sowohl die Aufwickelwalze 16 und die Abwickelwalze 15 als auch die Andruckwalzen 11, 12 und die Gegenwalzen 13, 14 können bevorzugt angetrieben sein. Dabei sind die Andruckwalzen 11, 12 und die Andruckgegenwalzen 13, 14 selbst nicht strukturiert ausgebildet, sondern die Strukturierung befindet sich in dem Strukturpapier 7, sodass die Strukturierung über eine verhältnismäßig lange Anlagestrecke A bzw. Wirkstrecke von z.B. 30 bis 80 cm in die Oberfläche des Leistenkörpers eingeprägt wird. Der aus dem Extruder 9 auslaufende Leistenkörper 6 wird folglich mit der Strukturierung versehen, sodass damit die Leiste 1 mit der strukturierten Oberfläche erzeugt wird, und zwar in einem (quasi) Endlosprozess in kontinuierlichem Durchlauf. Die Andruckwalzen 11, 12 und/oder die Andruckgegenwalzen 13, 14 können temperiert sein. Im Übrigen kann eine Kühlvorrichtung 17 zur Kühlung der Strukturbahn 7 vorgesehen sein, z.B. eine Wasserkühlung, die auf die nicht strukturierte Rückseite der Strukturbahn 7 wirkt. Sie kann zwischen den Andruckwalzen 11, 12 im Bereich der Anlagestrecke A angeordnet sein.

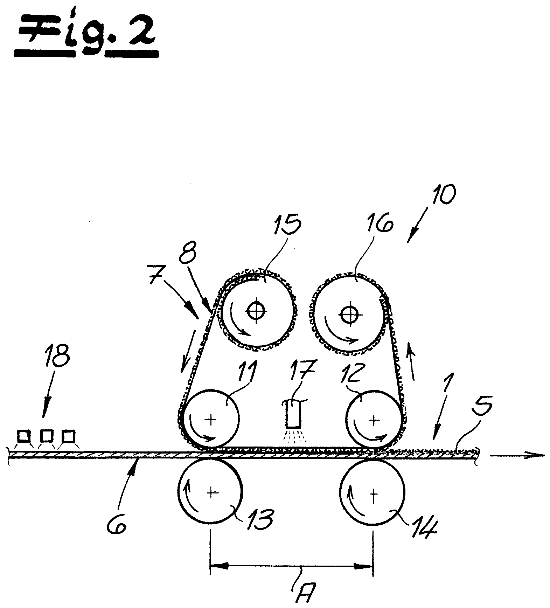

Während Fig. 1 eine Strukturierung in einem Inline-Prozess unmittelbar im Anschluss an die Extrusion zeigt, ist in Fig. 2 ein Offline-Prozess dargestellt, bei dem ein zunächst vorgefertigter Leistenkörper 6 zur Verfügung gestellt und z.B. in kaltem Zustand zugeführt wird. Der Leistenkörper 6 kann z.B. zuvor durch Extrusion hergestellt und zwischengelagert sein. Der Leistenkörper 6 wird anschließend zunächst mit einer Erwärmungsvorrichtung 18 beaufschlagt, d.h. die Oberfläche der Kunststoffbahn bzw. des Leistenkörpers 6 wird mit Wärme beaufschlagt und dadurch aufgeschmolzen und folglich in einen plastischen Zustand versetzt. In den auf diese Weise aufgeschmolzen bzw. angeschmolzenen Leistenkörper 6 wird anschließend die Leistenstruktur 5 eingeprägt, und zwar mit einer Prägevorrichtung 10, die identisch mit der Prägevorrichtung 10 nach Fig. 1 ist, sodass aus der Prägevorrichtung 10 wiederum ein Leistenkörper 1 mit strukturierter Leistenoberfläche ausläuft.

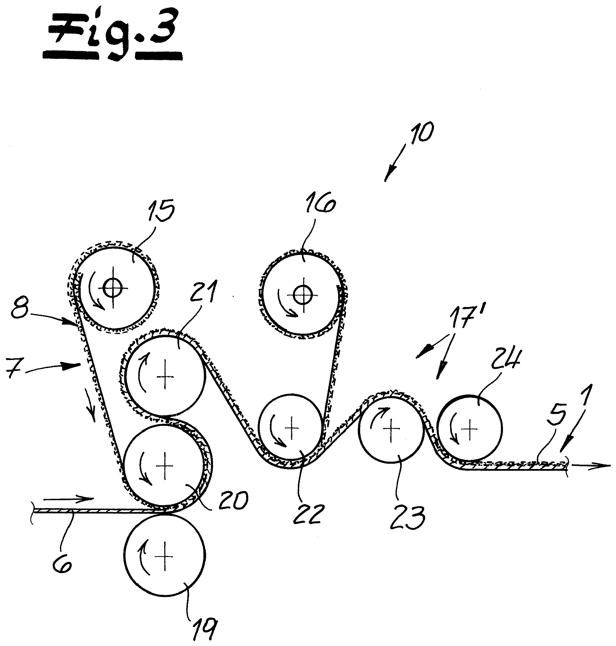

In Fig. 3 ist eine abgewandelte Ausführungsform dargestellt, bei der die Oberflächenstruktur in den Leistenkörper 6 mittels eines Glättwerkes bzw. eines Kalanderwerkes eingeprägt wird. Die Prägevorrichtung 10 ist folglich als Glättwerk bzw. Kalanderwerk ausgebildet. Der Leistenkörper 6 kann zunächst - so wie in Fig. 1 - mit Hilfe eines Extruders 9 hergestellt und in noch heißem, plastischen Zustand in die Prägevorrichtung 10 einlaufen und folglich ein Glättwerk bzw. einen Kalander mit Glättwerksunterwalze 19, Glättwerksmittelwalze 20 und Glättwerksoberwalze 21 durchlaufen, die jeweils temperiert sind und eine glatte Walzenoberfläche aufweisen. Der Prägespalt zwischen der Glättwerksmittelwalze 20 und der Glättwerksunterwalze 19 ist bevorzugt einstellbar. Durch dieses Glättwerk wird die Strukturbahn 7 mit dem Leistenkörper 6 gemeinsam hindurchgeführt. Dazu wird die Strukturbahn 7 von einer Abwickelwalze 15 abgewickelt und mit dem Leistenkörper 6 durch das Glättwerk hindurchgeführt und damit die Oberflächenstruktur in die Leistenoberfläche eingeprägt. Die mit der eingeprägten Oberflächenstruktur versehene Leiste wird nach dem Auslauf aus dem Glättwerk durch eine Kühlvorrichtung 17' geführt, die z.B. aus mehreren Kühlwalzen, einer ersten Kühlwalze 22, einer zweiten Kühlwalze 23 und einer dritten Kühlwalze 24 bestehen kann. Die Strukturbahn 7 wird mit einer Aufwickelwalze 16 aufgewickelt, die z.B. der ersten Kühlwalze nachgeordnet ist, sodass die Strukturbahn nach der ersten Kühlwalze 22 von dem Leistenkörper 6 getrennt wird. Bevorzugt kommt die in Fig. 3 dargestellte Prägevorrichtung 10 in einem Inline-Prozess zum Einsatz, d.h. das Glättwerk ist einer Extrusionsvorrichtung 9 unmittelbar nachgeordnet. Grundsätzlich besteht aber auch die Möglichkeit, die Prägevorrichtung 10 nach Fig. 3 in einem Offline-Prozess entsprechend Fig. 2 einzusetzen.

Gemäß Fig. 4 erfolgt die Herstellung des Leistenkörpers 6 durch Spritzgießen. Dazu wird eine Strukturbahn 7 bzw. ein Trennpapier vorgegebener Länge in die Kavität eines Spritzgusswerkzeuges 25 eingelegt (vgl. Fig. 4A). Anschließend wird das Spritzgusswerkzeug 25 mit dem Werkzeugoberteil 26, welches mit dem Angusssystem 27 ausgerüstet ist, verschlossen und die Polymermasse unter Bildung des Leistenkörpers 6 in die Kavität eingespritzt (vgl. Fig. 4B). Dabei erfolgt mit Hilfe der Strukturbahn 7 die Prägung der Leistenoberfläche. Danach wird das Spritzwerkzeug 25 geöffnet und die Leiste 1 mit der strukturierten Oberfläche unter Trennung von der Strukturbahn 7 entnommen (vgl. Fig. 4C).

Von besonderer Bedeutung ist die Tatsache, dass als Strukturbahn 7 im Rahmen der Prozesse nach den Figuren 1 bis 4 stets solche Strukturbahnen eingesetzt werden können, die in identischer Form auch für die Erzeugung der strukturierten Plattenoberflächen 2a verwendet werden, sodass für das Prägen der Plattenoberflächen 2a und das Prägen der Kantenleisten 1 der Stirnflächen 2b die gleichen Strukturpapiere 7 eingesetzt und damit identische oder nahezu identische Oberflächenstrukturen erzeugt werden. Dieses ist in Fig. 5 dargestellt, denn Fig. 5 zeigt eine fertige, dekorative Platte 2 mit strukturidentischer Prägung sämtlicher Oberflächenelemente. Die Platte gemäß Fig. 5, die z.B. als Möbelplatte ausgebildet ist, weist z.B. einen Holzwerkstoffkern bzw. eine Holzwerkstoffplatte oder einen strukturierten Schichtstoff (CPL oder HPL) auf, der im Bereich der oberen Oberfläche 2a und gegebenenfalls auch im Bereich der unteren (nicht dargestellten) Oberfläche mit Hilfe einer Strukturbahn 7 als Strukturgeber mit einer Oberflächenstruktur versehen ist. Im Bereich der Schmalflächen 2b sind die Kantenleisten 1 befestigt, die z.B. mit einem Verfahren der Figuren 1 bis 4 hergestellt werden und die folglich mit einer identischen Leistenstruktur 5 versehen sind. Für das Prägen der Oberflächenstruktur der Platte und das Prägen der Leistenstruktur werden dabei bevorzugt Strukturbahnen 7 mit identischem Aufbau und identischer Struktur verwendet, die z.B. aus ein und derselben Mutterrolle zugeschnitten sein können.

## Patentansprüche

1. Verfahren zum Herstellen einer Anbauleiste (1) für die Befestigung an einer dekorativen Platte (2), z.B. einer Kantenleiste für die Schmalflächenbeschichtung einer Möbelplatte oder dergleichen, mit einer strukturierten Oberfläche als Sichtseite,
wobei ein Leistenkörper (6) aus thermoplastischen Kunststoff erzeugt wird und wobei in die Leistenoberfläche des Leistenkörpers (6) mit zumindest einem Prägemittel eine Leistenstruktur (5) eingeprägt wird,
**dadurch gekennzeichnet, dass** als Prägemittel eine Strukturbahn (7) verwendet wird, die mit einer strukturierten Prägeoberfläche (8) versehen ist und mit der die Struktur (5) in die Leistenoberfläche eingeprägt wird.

2. Verfahren nach Anspruch 1, **dadurch gekennzeichnet, dass** als Strukturbahn (7) ein Strukturpapier verwendet wird.

3. Verfahren nach Anspruch 1 oder 2, **dadurch gekennzeichnet, dass** eine Strukturbahn (7) verwendet wird, die mit identischem Aufbau und identischer Struktur auch für die Erzeugung einer Oberflächenstruktur einer Plattenoberfläche der Platte verwendet wird.

4. Verfahren nach einem der Ansprüche 1 bis 3, **dadurch gekennzeichnet, dass** zum Prägen der Leistenstruktur (5) die Strukturbahn (7) auf einer Anlagestrecke (A) mit einer Länge von zumindest 20 cm, vorzugsweise zumindest 30 cm, gegen die Leistenoberfläche gedrückt wird, und zwar bevorzugt ohne Relativbewegung zwischen Strukturbahn (7) und Leistenoberfläche.

5. Verfahren nach einem der Ansprüche 1 bis 4, **dadurch gekennzeichnet dass** der Leistenkörper (6) durch Extrusion erzeugt wird und dass die Struktur (5) in-line, d.h. unmittelbar im Anschluss an die Extrusion, in den sich noch im heißen, plastischen Zustand befindlichen Leistenkörper (6) geprägt wird.

6. Verfahren nach einem der Ansprüche 1 bis 4, **dadurch gekennzeichnet, dass** der z.B. durch Extrusion vorgefertigte Leistenkörper (6) erwärmt wird und die Struktur (5) in die z.B. nachträglich erwärmte Oberfläche des Leistenkörpers (6) geprägt wird.

7. Verfahren nach einem der Ansprüche 1 bis 6, **dadurch gekennzeichnet, dass** die Struktur (15) in einem kontinuierlichen Betrieb in den sich bewegenden Leistenkörper (6) geprägt wird, z.B. nach der Extrusion, indem die Strukturbahn (7) mit der gleichen Geschwindigkeit geführt wird, wie der Leistenkörper (6).

8. Verfahren nach Anspruch 7, **dadurch gekennzeichnet, dass** der Leistenkörper (6) zum Prägen der Struktur (5) gemeinsam mit der Strukturbahn (7) über oder um mehrere Walzen, z.B. Andruckwalzen (11, 12), Gegenwalzen (13, 14) und/oder Kalanderwalzen bzw. Glättwerkswalzen (19, 20, 21) geführt wird.

9. Verfahren nach einem der Ansprüche 1 bis 4, **dadurch gekennzeichnet, dass** der Leistenkörper (6) durch Spritzgießen erzeugt wird und dass die Struktur (5) während des Spritzprozesses mit der in dem Spritzwerkzeug (25) angeordneten Strukturbahn (7) in die Leistenoberfläche geprägt wird.

10. Verfahren nach einem der Ansprüche 1 bis 9, **dadurch gekennzeichnet dass** die Strukturbahn (7) auf der Prägeoberfläche und/oder auf der der Prägeoberfläche gegenüberliegenden Rückseite hydrophobiert ist, z.B. mit einer Trennschicht, z.B. einer Oberflächenlackierung und/oder einer Trenn- oder Gleitmittelschicht versehen ist.

11. Verfahren nach einem der Ansprüche 1 bis 10, **dadurch gekennzeichnet dass** die strukturierte Prägeoberfläche (8) der Strukturbahn (7) von einer strukturierten Lackschicht gebildet wird.

12. Verfahren nach einem der Ansprüche 1 bis 11, **dadurch gekennzeichnet, dass** die Strukturbahn (7) eine Dicke von 100 µm bis 500 µm, vorzugsweise ein 100 µm bis 300 µm, z.B. 120 µm bis 250 µm aufweist.

13. Verfahren nach einem der Ansprüche 1 bis 12, **dadurch gekennzeichnet, dass** die strukturierte Prägeoberfläche (8) der Strukturbahn (7) Erhebungen von bis zu 200 µm, vorzugsweise bis zu 150 µm aufweist und/oder dass die strukturierte Prägeoberfläche Erhebungen mit einer Höhe von zumindest 50 µm, z.B. zumindest 100 µm aufweist.

14. Verfahren nach einem der Ansprüche 1 bis 13, **dadurch gekennzeichnet, dass** die Strukturbahn (7) sowohl als Strukturgeber als auch als Glanzgeber ausgebildet ist, z.B. durch eine satinierte Prägeoberfläche.

15. Verfahren zum Herstellen einer dekorativen Platte (2), insbesondere einer Möbelplatte,
wobei ein Plattenkörper mittels eines Prägemittels mit einer Oberflächenstruktur versehen wird und
wobei eine Anbauleiste, welche mit einem Verfahren nach einem der Ansprüche 1 bis 14 hergestellt ist, an dem Plattenkörper befestigt wird, z.B. an einer Schmalfläche der Platte,
**dadurch gekennzeichnet, dass** für das Prägen der Oberflächenstruktur der Platte und für das Prägen der Leistenstruktur (5) der Leiste (1) Strukturbahnen (7) mit identischem Aufbau und identischer Struktur verwendet werden.

16. Verfahren nach Anspruch 15, **dadurch gekennzeichnet, dass** die Strukturbahnen (7) für die Plattenoberfläche (2a) einerseits und die Leistenoberfläche (2b) andererseits aus ein und derselben Mutterrolle einer Strukturbahn (7) zugeschnitten werden.

## Claims

1. A method for producing an attachment strip (1) for fixing to a decorative panel (2), e.g., an edge strip for coating the narrow surface of a furniture panel or the like, having a textured surface as the visible side,
wherein a strip element (6) made of thermoplastic material is created and wherein a strip structure (5) is embossed into the strip surface of the strip element (6) by means of at least one embossing means,
**characterized in that** a structured web (7) is used as the embossing means, which structured web is provided with a structured embossing surface (8) and by means of which the structure (5) is embossed into the strip surface.

2. The method according to claim 1, **characterized in that** a structured paper is used as the structured web (7).

3. The method according to claim 1 or 2, **characterized in that** a structured web (7) is used, which, with identical construction and identical structure, is also used for creating a surface structure of a panel surface of the panel.

4. The method according to any one of claims 1 to 3, **characterized in that** for embossing the strip structure (5), the structured web (7) is pressed against the strip surface on a contact section (A) having a length of at least 20 cm, preferably at least 30 cm, and preferably without relative movement between the structured web (7) and the strip surface.

5. The method according to any one of claims 1 to 4, **characterized in that** the strip element (6) is created by means of extrusion and **in that** the structure (5) is embossed inline, i.e., immediately after extrusion, into the strip element (6) which is still in the hot, plastic state.

6. The method according to any one of claims 1 to 4, **characterized in that** the strip element (6), e.g., prefabricated by extrusion, is heated and the structure (5) is embossed, e.g., into the subsequently heated surface of the strip element (6).

7. The method according to any one of claims 1 to 6, **characterized in that** the structure (15) is embossed into the moving strip element (6) in a continuous operation, e.g., after extrusion, by guiding the structured web (7) at the same speed as the strip element (6).

8. The method according to claim 7, **characterized in that** for embossing the structure (5), the strip element (6) is guided together with the structured web (7) over or around multiple rollers, e.g., pressure rollers (11, 12), counter rollers (13, 14) and/or calender rollers or polishing stack rollers (19, 20, 21).

9. The method according to any one of claims 1 to 4, **characterized in that** the strip element (6) is created by means of injection molding and **in that** the structure (5) is embossed into the strip surface during the injection molding process by means of the structured web (7) arranged in the injection molding tool (25).

10. The method according to any one of claims 1 to 9, **characterized in that** the structured web (7) is hydrophobized on the embossing surface and/or on the rear side opposite the embossing surface, is provided, e.g., with a release layer, e.g., a surface lacquering and/or a release or lubricant layer.

11. The method according to any one of claims 1 to 10, **characterized in that** the structured embossing surface (8) of the structured web (7) is formed by a structured lacquer layer.

12. The method according to any one of claims 1 to 11, **characterized in that** the structured web (7) has a thickness of 100 µm to 500 µm, preferably 100 µm to 300 µm, e.g., 120 µm to 250 µm.

13. The method according to any one of claims 1 to 12, **characterized in that** the structured embossing surface (8) of the structured web (7) has elevations of up to 200 µm, preferably up to 150 µm, and/or **in that** the structured embossing surface has elevations with a height of at least 50 µm, e.g., at least 100 µm.

14. The method according to any one of claims 1 to 13, **characterized in that** the structured web (7) is designed both as a structure provider and a gloss provider, e.g., by means of a satin embossing surface.

15. A method for producing a decorative panel (2), in particular a furniture panel,
wherein a panel body is provided with a surface structure by means of an embossing means, and
wherein an attachment strip produced with a method according to any one of claims 1 to 14 is fixed to the panel body, e.g., to a narrow surface of the panel,
**characterized in that** structured webs (7) with identical construction and identical structure are used for embossing the surface structure of the panel and for embossing the strip structure (5) of the strip (1).

16. The method according to claim 15, **characterized in that** the structured webs (7) for the panel surface (2a) on the one hand and the strip surface (2b) on the other hand are cut from one and the same master roll of a structured web (7).

## Revendications

1. Procédé de fabrication d'une baguette rapportée (1) pour fixation à une plaque décorative (2), par exemple une baguette de bord pour le revêtement de surface étroite d'une plaque de meuble ou similaire, ayant une surface structurée comme face visible,
dans lequel un corps de baguette (6) en plastique thermoplastique est fabriqué et, dans la surface de baguette du corps de baguette (6), à l'aide d'au moins un moyen de gravure, une structure de baguette (5) est gravée,
**caractérisé en ce qu'**on utilise comme moyen de gravure une bande structurée (7) qui est pourvue d'une surface gravée structurée (8) et avec laquelle la structure (5) est gravée dans la surface de baguette.

2. Procédé selon la revendication 1, **caractérisé en ce qu'**on utilise comme bande structurée (7) un papier structuré.

3. Procédé selon la revendication 1 ou 2, **caractérisé en ce qu'**est utilisée une bande structurée (7) qui est employée avec une constitution identique et une structure identique également pour la fabrication d'une structure superficielle d'une surface de plaque de la plaque.

4. Procédé selon une des revendications 1 à 3, **caractérisé en ce que**, pour graver la structure de baguette (5), la bande structurée (7) est comprimée sur une distance de l'installation (A) sur une longueur d'au moins 20 cm, de préférence au moins 30 cm, contre la surface de baguette, et ce de préférence sans mouvement relatif entre la bande structurée (7) et la surface de baguette.

5. Procédé selon une des revendications 1 à 4, **caractérisé en ce que** le corps de baguette (6) est fabriqué par extrusion et que la structure (5) est gravée en ligne, c'est-à-dire directement après l'extrusion, dans le corps de baguette (6) se trouvant encore en état plastique chaud.

6. Procédé selon une des revendications 1 à 4, **caractérisé en ce que** le corps de baguette (6) préfabriqué par exemple par extrusion est chauffé et que la structure (5) est gravée dans la surface du corps de baguette (6) réchauffée ultérieurement.

7. Procédé selon une des revendications 1 à 6, **caractérisé en ce que** la structure (15) est gravée en fonctionnement continu dans le corps de baguette en mouvement (6), par exemple après l'extrusion, par le fait que la bande structurée (7) est guidée à la même vitesse que le corps de baguette (6).

8. Procédé selon la revendication 7, **caractérisé en ce que** le corps de baguette (6) est guidé, pour graver la structure (5) en même temps que la bande structurée (7) sur ou autour de plusieurs rouleaux, par exemple des rouleaux de compression (11, 12), des contres-rouleaux (13, 14) et/ou des rouleaux de calandre ou des rouleaux d'unité de lissage (19, 20, 21).

9. Procédé selon une des revendications 1 à 4, **caractérisé en ce que** le corps de baguette (6) est fabriqué par moulage par injection et que la structure (5) est gravée pendant le processus d'injection avec la bande structurée (7) disposée dans l'outil d'injection (25) dans la surface de baguette.

10. Procédé selon une des revendications 1 à 9, **caractérisé en ce que** la bande structurée (7) subit un traitement hydrophobe sur la surface de gravure et/ou sur la face arrière opposée à la surface de gravure, par exemple par une couche de séparation, par exemple un vernissage superficiel et/ou une couche de séparation ou d'agent lubrifiant.

11. Procédé selon une des revendications 1 à 10, **caractérisé en ce que** la surface gravée structurée (8) de la bande structurée (7) est constituée par une couche de vernis structurée.

12. Procédé selon une des revendications 1 à 11, **caractérisé en ce que** la bande structurée (7) présente une épaisseur de 100 pm à 500 pm, de préférence 100 µm à 500 µm, par exemple 120 µm à 250 µm.

13. Procédé selon une des revendications 1 à 12, **caractérisé en ce que** la surface gravée structurée (8) de la bande structurée (7) est présente des proéminences de jusqu'à 200 µm, de préférence jusqu'à 150 µm, et/ou que la surface gravée structurée présente des proéminences d'une hauteur d'au moins 50 µm, par exemple au moins 100 µm.

14. Procédé selon une des revendications 1 à 13, **caractérisé en ce que** la bande structurée (7) est réalisée aussi bien comme élément de structuration que comme élément de brillance, par exemple grâce à une surface gravée satinée.

15. Procédé de fabrication d'une plaque décorative (2), en particulier d'une plaque de meuble,
dans laquelle un corps de plaque est pourvu au moyen d'au moins un moyen de gravure d'une structure superficielle et
étant prévue une baguette rapportée qui est fabriquée par un procédé selon une des revendications 1 à 14 et à laquelle un corps de plaque est fixé, par exemple sur une surface étroite de la plaque,
**caractérisé en ce que**, pour la gravure de la structure superficielle de la plaque et pour la gravure de la structure de baguette (5) de la baguette (1), des bandes structurées (7) ayant la même constitution et une structure identique sont utilisées.

16. Procédé selon la revendication 15, **caractérisé en ce que** les bandes structurées (7) destinées à la surface de plaque (2a) d'une part et à la surface de baguette (2b) d'autre part sont découpées dans le seul et même rouleau mère d'une bande structurée (7).
